# EUROPÄISCHE PATENTANMELDUNG

(11) **EP 4 431 249 A1**
(43) Veröffentlichungstag der Anmeldung: **18.09.2024**
(21) Anmeldenummer: 23162649.0
(22) Anmeldetag: 17.03.2023
(51) Int. Cl.: B25J 9/16

(54) **VERFAHREN UND SYSTEM ZUR AUSFÜHRUNG VON BAUARBEITEN**

(71) Anmelder: Hilti Aktiengesellschaft, 9494 Schaan (LI)
(72) Erfinder: Kroenert, Nils, 9472 Grabs (CH); Zanona, Julia, 6800 Feldkirch (AT); Brugger, Peter, 6800 Feldkirch (AT)
(74) Vertreter: Hilti Aktiengesellschaft Corporate Intellectual Property

(57) **Zusammenfassung**

Die Erfindung betrifft ein Verfahren (1000) zur Ausführung von Bauarbeiten durch einen Bauroboter (10), wobei ein Bauroboter (10) ein Bauelement (115) an einem Gebäudeteil (112) anordnet. Um einen möglichst unterbrechungsarmen Ablauf und damit ein möglichst autonomes Arbeiten des Bauroboters (10) zu ermöglichen, wird vorgeschlagen, dass das Verfahren (1000) die Schritte umfasst: Erfassen eines Ist-Zustands des Gebäudeteils (112), Auswählen eines Bauelements (115) aus einer Vielzahl unterschiedlicher Bauelemente (115) und / oder Fertigen des Bauelements (115) anhand des Ist-Zustands des Gebäudeteils (112), Anordnen des Bauelements (115) am Gebäudeteil (112) durch einen Bauroboter (10). Darüber hinaus betrifft die Erfindung auch einen Bauroboter (10), der zur Ausführung des Verfahrens (1000) eingerichtet ist.

## Beschreibung

Die Erfindung geht aus von einem Verfahren zur Ausführung von Bauarbeiten durch einen Bauroboter.

Zur Optimierung der Produktivität sowie zur Vermeidung von Gefahren und Risiken bei der Ausführung von Bauarbeiten kommen mittlerweile zunehmend Bauroboter zum Einsatz. Diese Bauroboter werden insbesondere dazu verwendet, Bauarbeiten entsprechend eines BIM-Modells, auch "building information model" genannt, auszuführen. Ein solches BIM-Modell kann CAD-Daten von Gebäudeteilen umfassen. Es kann auch Daten zu in einem Gebäude anzubringenden Bauelementen aufweisen. Beispielsweise kann im BIM-Modell vorgesehen sein, ein Bauelement an einem Gebäudeteil anzubringen. Beispielsweise kann im BIM-Modell vorgesehen sein, eine bestimmte Arten von Befestigungselementen zur Verlegung von Rohren, Leitungen, Kabeln und dergleichen, beispielsweise Rohrschellen, Kabeltrassen, Halterungen oder dergleichen, an einer Wand oder einer Decke zu befestigen.

Während ein entsprechend ausgestatteter Bauroboter unter Laborbedingungen solche Bauarbeiten unter Umständen ausführen kann, kommt es häufig dazu, dass derartige Bauroboter unter Praxisbedingungen scheitern. Dadurch ist bislang der Einsatz von Baurobotern sehr begrenzt. Auch ist dadurch der erreichbare Autonomiegrad, mit dem derartige Bauroboter arbeiten können, aufgrund erforderlicher, manueller Eingriffe durch einen Bauarbeiter limitiert. Über längere Zeit hinweg unbeaufsichtigte Ausführungen von Bauarbeiten durch Bauroboter werden somit praktisch unmöglich. Dadurch erreicht bislang der Nutzen des Einsatzes von Baurobotern in der Praxis bei weitem nicht die Erwartungen.

Aufgabe der vorliegenden Erfindung ist es daher, ein Verfahren und einen Bauroboter anzubieten, die es ermöglichen, Bauarbeiten auf einer Baustelle mit einem möglichst hohen Autonomiegrad auszuführen.

Gelöst wird die Aufgabe durch ein **Verfahren zur Ausführung von Bauarbeiten** durch einen Bauroboter, wobei ein Bauroboter ein Bauelement an einem Gebäudeteil anordnet, umfassend die Schritte: Erfassen eines Ist-Zustands des Gebäudeteils, Auswählen eines Bauelements aus einer Vielzahl unterschiedlicher Bauelemente und / oder Fertigen des Bauelements anhand des Ist-Zustands des Gebäudeteils und Anordnen des Bauelements am Gebäudeteil durch einen Bauroboter.

Dem Verfahren liegt unter anderem der Gedanke zugrunde, dass unter Praxisbedingungen Abweichungen des Ist-Zustands von einem Sollzustand vorkommen können. Der Sollzustand kann beispielsweise in einem Plan, beispielsweise in Form eines BIM-Modells, hinterlegt sein. Beispielsweise können Bohrlöcher um wenige Zentimeter gegenüber dem im BIM-Modell hinterlegten Plan versetzt sein. Ebenso können Wände, Böden, Decken oder andere Gebäudeteile im Vergleich zum Plan versetzt, in einer anderen Größe ausgebildet und / oder anders ausgerichtet sein.

Je nach Art des zu montierenden Bauelements oder des Gebäudeteils können bereits geringste Abweichungen schon dazu führen, dass das Bauelement insgesamt nicht mehr ordnungsgemäß an das Gebäudeteil angeordnet werden kann oder werden darf. Geringe Abweichungen können beispielsweise dazu führen, dass das geplante Bauelement nicht mehr genug Platz an dem Gebäudeteil, beispielsweise der Wand, der Decke oder dem Boden, findet. Es kann vorkommen, dass toleranzbedingte Fehler sich bei exakter Umsetzung des Plans auf nachfolgend ausgeführte Bauarbeiten auswirken. Insbesondere können mehrere toleranzbedingte Fehler über mehrere Bauarbeiten und / oder über mehrere zusammenwirkende Bauelemente oder Gebäudeteile hinweg kumulieren. Unter Umständen darf beispielsweise aufgrund von technischen Zulassungsvoraussetzungen ein Bauelement nicht mehr an der gemäß dem Plan vorgesehenen Position verbaut werden.

Daher sieht das hier vorgestellte Verfahren vor, einen Ist-Zustand zu analysieren und darauf aufbauend geeignete Bauelemente auszuwählen oder zu fertigen und am Gebäudeteil anzuordnen. Der Bauroboter wird dadurch befähigt, vom Plan abzuweichen, und kann dadurch bislang in solchen Fällen erfolgende Abbrüche oder Unterbrechungen sowie bislang notwendige manuelle Interventionen durch Bauarbeiter vermeiden. Somit können sein Autonomiegrad und damit auch seine Produktivität erheblich gesteigert werden.

Im Einzelnen wird dazu hier vorgeschlagen, zunächst einen Ist-Zustand des Gebäudeteils zu bestimmen. Um im Beispiel zu bleiben könnte dabei ermittelt werden, dass der Bereich, in dem das Bauelement laut Plan angeordnet werden soll, kleiner als geplant ist. Dementsprechend kann der Bauroboter ein Bauelement auswählen, dass zwar der ursprünglichen Art gemäß dem Plan entspricht, aber beispielsweise geringere Abmessungen als ursprünglich geplant aufweist. Es könnte beispielsweise auch festgestellt werden, dass das Gebäudeteil, beispielsweise eine Wand, anders ausgerichtet ist als geplant. Es kann beispielsweise gegen die Schwerkraftrichtung geneigt, also nicht exakt lotrecht, sein. Abstände zu anderen Gebäudeteilen oder zu anderen Bauelementen könnten damit vom Plan abweichen. Bauelemente zur Verbindung mit den anderen Gebäudeteilen beziehungsweise mit den anderen Bauelementen sollten dann andere Längen als geplant aufweisen.

Wie im vorgenannten Beispiel ausgeführt, besteht ein häufiges Problem darin, dass aufgrund von Abweichungen des Ist-Zustands vom Plan Abmessungen gegenüber dem Plan geändert werden sollten. In einem solchen Fall kann es somit vorteilhaft sein, dass aus einer Vielzahl gleichartiger Bauelemente, jedoch mit unterschiedlichen Abmessungen, ausgewählt wird. Insbesondere kann dann ein Bauelement der ursprünglich geplanten Art, aber mit angepassten Abmessungen ausgewählt werden und anschließend verbaut werden.

Ein weiterer, häufiger Fall besteht darin, das Bohrungen und / oder Befestigungselemente, beispielsweise Schraubanker, Dübel oder dergleichen, bereits an dem Gebäudeteil angebracht sind, wobei deren Positionen jedoch zumindest geringfügig vom Plan abweichen. Dann kann es vorteilhaft sein, aus einer Vielzahl gleichartiger Bauelemente mit unterschiedlichen Befestigungsstellen auszuwählen. Insbesondere kann ein Bauelement ausgewählt werden, dessen Befestigungsstellen den Positionen der Bohrungen und / oder der Anker gemäß dem Ist-Zustand entsprechen.

Solange die Abweichungen des Ist-Zustands vom Plan in begrenztem beziehungsweise geringem Umfang abweichen, sollte der Plan insgesamt zumindest nicht wesentlich gestört werden. Daher ist es vorteilhaft, wenn das Bauelement oder zumindest die Art des Bauelements anhand eines Plans, insbesondere anhand eines BIM-Modells ausgewählt wird. Somit kann anhand des Plans zumindest die Art des Bauelements, beispielsweise ob es ein Deckenelement, eine Leitung, ein Kabel, eine Kabeltrasse oder dergleichen ist, bestimmt werden und innerhalb der Art des Bauelements dasjenige ausgewählt werden, das am besten für den Ist-Zustand geeignet ist.

Beispielsweise für Dokumentationszwecke, beispielsweise um spätere Reparaturarbeiten oder Sanierungsarbeiten zu erleichtern, ist es wünschenswert, wenn das ausgewählte Bauelement im Plan, beispielsweise dem BIM-Modell, registriert wird. Denkbar ist also, den Plan anhand des Ist-Zustands und anhand des tatsächlich verwendeten Bauelements zu aktualisieren. Somit kann der Plan an den tatsächlich vorliegenden Ist-Zustand angepasst werden.

Zur weiteren Produktivitätssteigerung kann das Bauelement auf einer entfernten Vorfertigung ausgewählt oder dort gefertigt werden. Dazu kann vorteilhafterweise der erfasste Ist-Zustand oder eine spezifische Bauform des Bauelements an die Vorfertigung übermittelt werden. Das Bauelement kann dann in der Vorfertigung ausgewählt oder gefertigt werden. Unter einer Vorfertigung kann ein Lagerort und / oder Fertigungsort verstanden werden, der räumlich zumindest von dem Gebäudeteil separiert ist. Somit kann beispielsweise zunächst auf Basis des Ist-Zustands eine spezifische Bauform ausgewählt werden und dann in der Vorfertigung ein entsprechendes Bauelement ausgesucht oder gefertigt werden. Die Auswahl der spezifischen Bauformen kann vor Ort durch den Bauroboter erfolgen. Alternativ oder ergänzend kann auch der Ist-Zustand des Gebäudeteils an die Vorfertigung übermittelt werden. In der Vorfertigung kann dann die für den Ist-Zustand benötigte spezifische Bauform des Bauelements bestimmt und anschließend ein entsprechendes Bauelement aus einem Lagerbestand ausgewählt und / oder gefertigt werden.

Denkbar ist, den Ist-Zustand des Gebäudeteils mit Hilfe einer Bildaufnahmeeinheit zur Aufnahme wenigstens einer optischen Aufnahme zu erfassen. Die Bildaufnahmeeinheit kann eine 2D- oder 3D-Kamera umfassen. Sie kann auch einen Laserdistanzmesser, beispielsweise ein LIDAR und / oder ein time-of-flight-sensor, umfassen.

Alternativ oder ergänzend kann der Ist-Zustand des Gebäudeteils mit Hilfe von Messdaten zu einer vorangehend ausgeführten Bauarbeit erfasst werden. Beispielsweise kann während einer ersten Bohrarbeit ein Material des Gebäudeteils bestimmt werden. Beispielsweise können dazu Vibrationen als Messdaten erfasst werden. Denkbar ist auch, dazu eine Bohrfortschrittsgeschwindigkeit als Messdatum zu erfassen.

Abhängig vom erfassten Material kann dann das Bauelement ausgewählt werden. Wird beispielsweise erfasst, dass ein Material einer Wand anders als gemäß Plan zu erwarten ist, beispielsweise bei der Bearbeitung eines Bestandsgebäudes erfasst wird, dass Hohlziegel anstelle von beispielsweise Beton, verbaut ist, kann ein für Hohlziegel geeigneter Dübel anstatt des gemäß Plan vorgesehenen Betonankers ausgewählt und insbesondere anschließend gesetzt werden. Somit können gravierende Folgeschäden aufgrund von Datenfehlern in dem Plan vermieden werden.

Es kann auch eine Materialfestigkeit, insbesondere während der vorangehenden Bauarbeit, erfasst werden. Beispielsweise kann während eines Bohrens eines Bohrlochs erfasst werden, dass das Material des Gebäudeteils eine geringere Festigkeit aufweist als erwartet. Beispielsweise kann das Material des Gebäudeteils noch nicht so weit ausgehärtet sein wie erwartet. Dann kann ein Bauelement, beispielsweise ein Befestigungsmittel, anstelle des gemäß Plan vorgesehenen Bauelements ausgewählt werden, das für die Verwendung bei der erfassten Materialfestigkeit geeignet ist.

Ein Messen während der vorangehenden Bauarbeit kann zudem den Arbeitsfortschritt beschleunigen.

Gemäß einem weiteren Fallbeispiel kann erfasst werden, dass eine geplante Bohrposition an einer unzulässigen Bohrposition geplant ist. Beispielsweise kann während einem vorangehenden Versuch, ein Bohrloch zu bohren, ermittelt werden, dass die Bohrlochposition eine Betonfuge trifft oder treffen würde. Dann kann die Arbeitsposition, hier also die geplante Bohrlochposition, angepasst werden, sodass an einer zulässigen Position gearbeitet, hier also gebohrt, wird. Nachfolgend kann ein Bauelement ausgewählt werden, das geeignet ist, den Versatz zwischen der geplanten und der tatsächlichen Position zu kompensieren.

Ein analoger Fall ist auch denkbar bei einem Wellblech, beispielsweise bei einer als verlorene Schalung verwendeten Wellblechdecke, bei der bei einer vorangehenden Bauarbeit erfasst wird, dass die Arbeitsposition gemäß Plan sich im Bereich einer Schräge des Wellblechs befinden würde. Dann kann die Arbeitsposition abgeändert werden, sodass sie bis außerhalb der Schräge verlagert wird. Nachfolgend kann dann wiederum ein Bauelement, beispielsweise eine Halterung, aufgrund dieser Abweichung des Ist-Zustands vom Plan ausgewählt werden, sodass der Unterschied zum Plan kompensiert wird.

In den Rahmen der Erfindungen fällt auch ein **Bauroboter** zur Ausführung von Bauarbeiten, wobei der Bauroboter eine mobile Plattform, wenigstens einen Manipulator und eine Steuerung aufweist, und wobei die Steuerung eingerichtet ist, das beschriebene Verfahren zur Ausführung von Bauarbeiten auszuführen. Ein solcher Bauroboter kann somit Bauarbeiten in einer an einen Ist-Zustand des Gebäudeteils angepassten Weise ausführen. Insbesondere kann er entsprechend dem Ist-Zustand geeignete Bauelemente an das Gebäudeteil anordnen. Somit kann der Bauroboter mit einem höheren Autonomiegrad arbeiten. Abbrüche durch den Bauroboter, weil eine Bauarbeit nicht gemäß einem Plan ausführbar sind, ergeben sich seltener oder können sogar vollständig vermieden werden. Manuelle Interventionen werden somit seltener erforderlich oder können sogar vollständig vermieden werden.

Der Bauroboter kann zur Ausführung von Bauarbeiten auf einer Hochbau-Baustelle, zur Errichtung von Industrieanlagen und / oder auf einer Tiefbau-Baustelle ausgebildet sein. Er kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Er kann ein oder mehrere Werkzeugmaschinen aufweisen. Insbesondere kann die Werkzeugmaschine wechselbar angeordnet und / oder ausgebildet sein. Die Werkzeugmaschine kann eine elektrische Werkzeugmaschine sein. Die Werkzeugmaschine kann ein Werkzeug aufweisen.

Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens 3 Freiheitsgrade aufweisen. Insbesondere kann er wenigstens 6 Freiheitsgrade aufweisen.

Der Bauroboter weist eine mobile Plattform auf. Die mobile Plattform kann eine Fahrplattform, beispielsweise ein Räderfahrwerk und / oder ein Kettenfahrwerk, umfassen. Die mobile Plattform kann wenigstens zwei Freiheitsgrade aufweisen. Der Bauroboter kann insgesamt wenigstens zehn Freiheitsgrade aufweisen. Denkbar ist auch, dass die mobile Plattform eine Flugplattform umfasst. In diesem Fall kann der Bauroboter auch als unbemanntes Flugobjekt ausgebildet sein.

Der Bauroboter kann einen Entfernungsmesser aufweisen. Der Entfernungsmesser kann als 3D-Kamera ausgebildet sein und / oder eine solche umfassen. Alternativ oder ergänzend kann er einen Laserscanner umfassen.

Die Steuerung kann als Rechnereinheit ausgebildet sein. Sie kann einen Prozessor, eine Speichereinheit und / oder einen auf dem Prozessor ausführbaren Programmcode aufweisen. Der Prozessor kann ein oder mehrere Unterprozessoren aufweisen. Der Programmcode kann eingerichtet sein, das Verfahren zur Steuerung des Bauroboters auszuführen.

Der Ist-Zustand des Gebäudeteils lässt sich besonders effizient ermitteln, wenn der Bauroboter eine Bildaufnahmeeinheit zur Aufnahme wenigstens einer optischen Aufnahme sowie eine Bildverarbeitungseinheit aufweist. Die Steuerung des Bauroboters kann eingerichtet sein, über die Bildaufnahmeeinheit wenigstens eine Aufnahme des Gebäudeteils aufzunehmen und mittels der Bildverarbeitungseinheit aus der Aufnahme einen Ist-Zustand des Gebäudeteils zu ermitteln. Die Bildaufnahmeeinheit kann dabei eine Kamera umfassen. Die Kamera kann eingerichtet sein, zweidimensionale und / oder dreidimensionale Bild Daten aufzunehmen. Die Bildaufnahmeeinheit kann auch mehrere Kameras umfassen. Denkbar ist insbesondere, dass die Bildaufnahmeeinheit wenigstens einen Laserdistanzmesser, beispielsweise ein LI DAR und / oder eine time of flight-Sensor, umfasst.

Alternativ oder ergänzend ist denkbar, dass der Bauroboter eingerichtet ist, wenigstens ein Messdatum zu einer ausgeführten Bauarbeit zu erfassen. Das Messdatum kann beispielsweise eine Materialart, insbesondere des Gebäudeteils, eine Abmessung, beispielsweise eine Materialdicke, beispielsweise in Form einer Angabe, dass ein Material mindestens eine bestimmte Dicke aufweist, einen Winkel, beispielsweise eine Neigung des Gebäudeteils, und / oder einen Versatz, beispielsweise des Gebäudeteils, insbesondere gegenüber dem Plan, betreffen.

Der Bauroboter kann eine Halterung zum Halten des Bauelements aufweist. Der Bauroboter kann eingerichtet sein, das Bauelement am Gebäudeteil anzuordnen und / oder an diesem zu halten.

Er kann weiter ein Setzgerät, beispielsweise ein Schraubgerät und / oder einen Nagler, aufweisen.

Dann kann der Bauroboter das Bauelement an dem Gebäudeteil halten und währenddessen mit Hilfe des Setzgeräts, beispielsweise mit Hilfe von Schraubankern oder Nägeln, am Gebäudeteil befestigen. Dazu kann der Bauroboter insbesondere eine Halterung zum Halten des Bauelements aufweist.

Die Halterung kann wenigstens einen, vorzugsweise steuerbaren, Saugnapf aufweisen. Alternativ oder ergänzend kann sie auch einen Greifer und / oder eine steuerbare Klemmvorrichtung aufweisen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter,
- Fig. 2: eine schematische Abbildung eines BIM-Modells,
- Fig. 3: eine Hochbau-Baustelle mit einem Gebäudeteil und einem Bauroboter sowie eine Vorfertigung und
- Fig. 4: ein Flussdiagramm eines Verfahrens zur Ausführung von Bauarbeiten durch einen Bauroboter.

In der nachfolgenden Beschreibung der Figuren werden zur Erleichterung des Verständnisses der Erfindung für gleiche oder sich funktional entsprechende Elemente jeweils die gleichen Bezugszeichen verwendet.

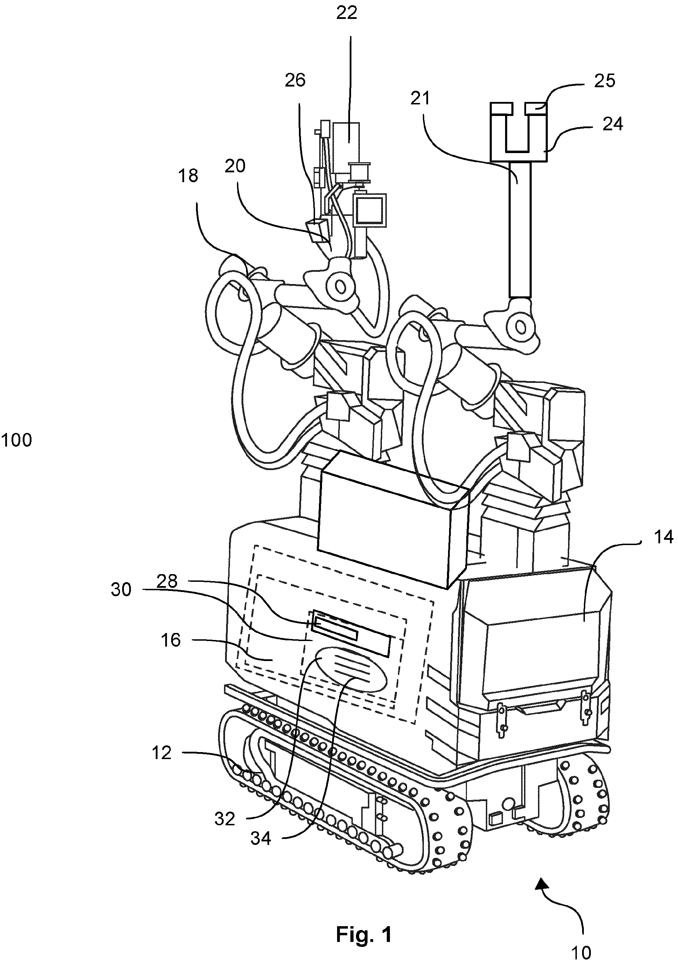

**Fig. 1** zeigt einen Bauroboter **10** mit einem als Kettenfahrwerk ausgebildeten Fahrwerk **12.** In einem Gehäuse **14** des Bauroboters 10 ist ein Steuerraum **16** ausgebildet. In Fig. 1 ist der Steuerraum 16, der sich innerhalb des Gehäuses 14 befindet, lediglich schematisch angedeutet.

Der Bauroboter weist oberseitig des Gehäuses 14 einen ersten Manipulator **18** und einen zweiten Manipulator **19** auf. Die Manipulatoren 18, 19 sind als multiaxiale, steuerbare Arme ausgebildet. An ihren freien Enden befinden sich ein erster Endeffektor 20 beziehungsweise ein zweiter Endeffektor 21.

Am ersten Endeffektor **20** ist ein Schraubensetzgerät **22,** insbesondere ein mit einem

Schraubenmagazin versehenes Schraubensetzgerät, angeordnet. Am zweiten Endeffektor 21 ist eine Halterung **24** mit einem Greifer **25** angeordnet. Der Greifer 25 kann wenigstens einen steuerbaren Saugnapf aufweisen.

Der zweite Manipulator 21 ist zusammen mit seiner Halterung 24 eingerichtet, ein Bauelement in einer vorgegebenen Position zu halten. Dazu kann der Greifer 25 das Bauelement wahlweise aufnehmen, halten oder freigeben.

Der Bauroboter 10 weist ferner eine Bildaufnahmeeinheit **26** zur Aufnahme optischer Aufnahmen so wie eine Bildverarbeitungseinheit **28** zur Bildverarbeitung der Aufnahmen auf. Die Bildaufnahmeeinheit 26 weist einen RGB- als auch einen time-of-flight-Sensor auf, sodass die Bildaufnahmeeinheit 26 in der Lage ist, Farbbilder inklusive Tiefeninformationen aufzunehmen. Die Bildverarbeitungseinheit 28 ist Teil einer Steuerung **30.** Die Steuerung 30 ist innerhalb des Gehäuses 14, insbesondere im Steuerraum 16, angeordnet. Sie und insbesondere die Bildverarbeitungseinheit 28 sind daher ebenfalls lediglich schematisch in Fig. 1 dargestellt.

Der Bauroboter 10 ist zur Ausführung von Bauarbeiten, insbesondere zum Anordnen von Bauelementen an Gebäudeteilen, ausgebildet. Als Gebäudeteile können Böden, Decken und Wände bearbeitet werden. Die Bauarbeiten können eine Baustelle, beispielsweise eine Hochbau-Baustelle oder eine Tiefbau-Baustelle, betreffen.

Der Bauroboter 10 ist eingerichtet, ein Bauelement am Gebäudeteil zu positionieren, zu halten und am Gebäudeteil anzubringen. Insbesondere kann er das Bauelement mit seinem zweiten Manipulator 21 und insbesondere mit der Halterung 24 in eine gewünschte Position bringen und mit Hilfe des ersten Manipulators 20, insbesondere mit dem Schraubensetzgerät 22, am Gebäudeteil durch Einschrauben von Schraubankern in vorab gefertigte Bohrlöcher befestigen.

Zur Ausführung derartiger Bauarbeiten wird der Bauroboter 10 durch die Steuerung 30 gesteuert.

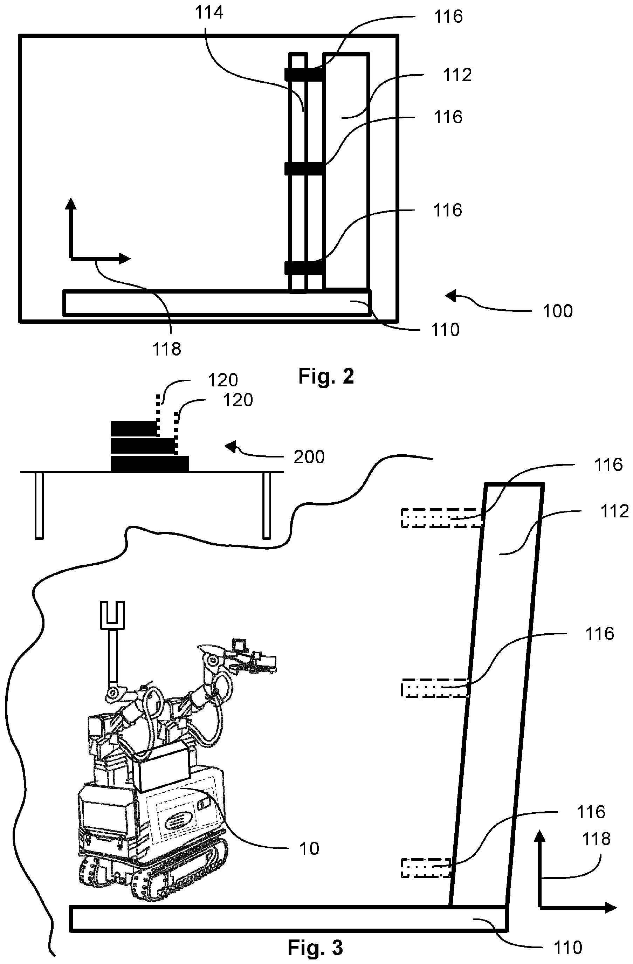

Die Steuerung 30 umfasst eine Speichereinheit **32.** Die Steuerung 30 ist mit ausführbarem Programmcode **34** ausgestattet. Dazu ist der Programmcode 34 abrufbar und ausführbar in der Speichereinheit 32 gespeichert. Mit Hilfe des Programmcodes 34 ist die Steuerung 30 eingerichtet, das vorangehend sowie im Zusammenhang mit den nachfolgenden Fig. 2 bis Fig. 4 beschriebene Verfahren zur Ausführung von Bauarbeiten mit Hilfe des Bauroboters 10 auszuführen. Die Bildverarbeitungseinheit 28 kann mit Hilfe des Programmcodes 34 ausgebildet sein. Denkbar ist auch, dass sie einen Grafikprozessor umfasst. Allgemein ist denkbar, dass ein Teil der Steuerung 30 oder die gesamte Steuerung 30 auf einem entfernten Rechnersystem, beispielsweise einem Cloud-basierten Rechnersystem, ausgebildet ist.

Die Bildaufnahmeeinheit 26 kann somit ein oder mehrere Aufnahmen des Gebäudeteils aufnehmen und mittels der Bildverarbeitungseinheit 28 aus der Aufnahme einen Ist-Zustand des Gebäudeteils ermitteln. Als Teil der Ermittlung des Ist-Zustands kann die Steuerung 30, insbesondere die Bildverarbeitungseinheit 28, auch einen Vergleich mit einem Plan, beispielsweise mit einem BIM-Modell, durchführen, um Abweichungen vom Plan zu identifizieren.

**Fig. 2** zeigt eine schematische Darstellung eines BIM-Modells **100.** Im BIM-Modell 100 ist ein Gebäude **110** mit einem Gebäudeteil **112,** insbesondere eine vertikal ausgerichtete Wand, repräsentiert, an dem eine Leitung **114** mit Hilfe von drei Bauelementen 116, in diesem Beispiel Befestigungselemente wie beispielsweise Rohrschellen, zu befestigen sind.

Anhand eines in Fig. 2 schematisch abgebildeten Koordinatensystems **118** ist ferner zu erkennen, dass vorgesehen ist, sowohl das Gebäudeteil 110 als auch die Leitung 112 lotrecht auszurichten.

Gemäß dem BIM-Modell 100 sollen daher die drei Bauelemente 116 nicht nur derselben Art, also beispielsweise Rohrschellen, entsprechen, sondern auch identische Abmessungen aufweisen.

**Fig. 3** zeigt eine Hochbau-Baustelle, auf der das Gebäude 110 errichtet wird. Zu erkennen ist insbesondere das Gebäudeteil 112, an dem mit Hilfe des Bauroboters 10 die drei Bauelemente 116 befestigt werden sollen.

Weiter zeigt Fig. 3 schematisch eine Vorfertigung **200,** die sich beispielsweise in einem anderen Gebäude als dem Gebäude 110 befinden kann.

In zur Verdeutlichung deutlich überzeichneter Darstellung ist aus Fig. 3 und im Vergleich mit dem symbolisch dargestellten Koordinatensystem 118 ferner zu erkennen, dass das

Gebäudeteil 112 in der Realität nicht exakt lotrecht, sondern gegen die Schwerkraftrichtung geneigt, beispielsweise mit einem Neigungswinkel von 1°, errichtet ist.

Dementsprechend werden, wie in Fig. 3 schematisch angedeutet, unterschiedlich lange Bauelemente 116 benötigt, um die bestehende Abweichung auszugleichen und die Leitung 114 (siehe Fig. 2) trotzdem exakt vertikal ausgerichtet am Gebäudeteil 112 befestigen zu können.

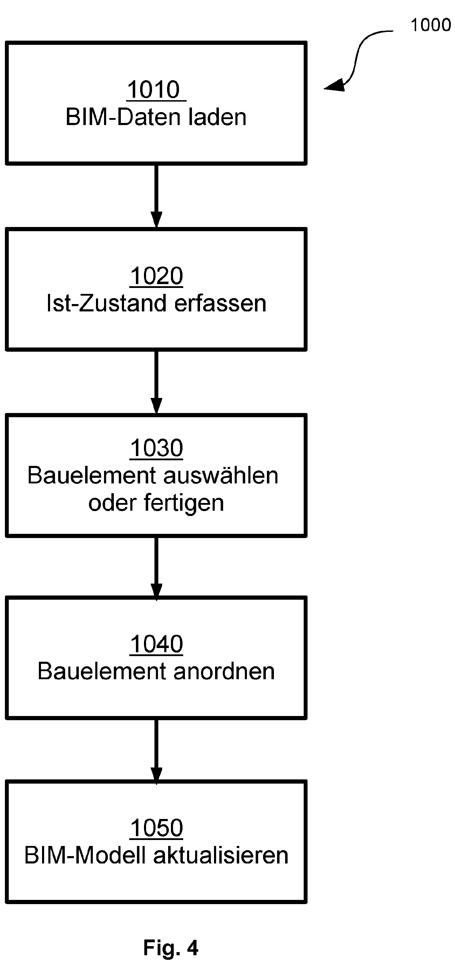

Anhand von **Fig. 4** wird ein Verfahren **1000** erläutert, mit dem die Bauelemente 116 an dem Gebäudeteil 110 durch den Bauroboter 10 angebracht werden.

Zum besseren Verständnis wird auf die im Zusammenhang mit den Fig. 1 bis 3 bereits eingeführten Bezugszeichen Bezug genommen.

In einer ersten Phase **1010** lädt der Bauroboter 10 zumindest die auszuführende Bauarbeiten, hier also die Anordnung von Bauelementen 116 am Gebäudeteil 110, betreffende Daten aus dem BIM-Modell 100 in seine Speichereinheit 32.

In einer anschließenden Phase **1020,** in der der Bauroboter einen Ist-Zustand des Gebäudeteils 110 erfasst, nimmt der Bauroboter 10 mit seiner Bildaufnahmeeinheit 26 Aufnahmen des Gebäudeteils 110 auf. Mit der Bildverarbeitungseinheit 28 wertet er diese Aufnahmen aus und vergleicht sie mit den entsprechenden Daten aus dem BIM-Modell 100.

Aus dem Vergleich ergibt sich als Ist-Zustand des Gebäudeteils 110 unter anderem, dass das Gebäudeteil 110 anders als im BIM-Modell 100 vorgesehen gegen die Schwerkraftrichtung geneigt ist.

In einer nachfolgenden Phase **1030** wählt der Bauroboter 10 geeignete Bauelemente 116 aus oder veranlasst deren Fertigung in der Vorfertigung 200.

Dazu prüft der Bauroboter 10 zunächst die Verwendbarkeit der gemäß BIM-Modell 100 vorgesehenen Bauelemente 116. Dazu kann der Bauroboter 10 zunächst ermitteln, welche tatsächlichen Abstände sich zwischen der Leitung 114 und dem Gebäudeteil 110 ergeben würden, wenn die Leitung 114 trotz der Neigung des Gebäudeteils 110 wie geplant exakt lotrecht errichtet würde. Anschließend kann der Bauroboter anhand von mit den Bauelementen 116 verbundenen Zulassungsdaten, beispielsweise aus einer Zulassungsdatenbank, wie beispielsweise Stabilitätsanforderungen, prüfen, ob die geplanten Bauelemente 116 es erlauben, die tatsächlichen Abstände zu überbrücken.

Im Falle der Zulässigkeit, also wenn kein Abänderungsbedarf gegenüber dem ursprünglichen Plan gemäß dem BIM-Modell 100 besteht, wählt der Bauroboter 10 die ursprünglich geplanten Bauelemente 116 aus.

Im Falle der Nicht-Zulässigkeit wählt der Bauroboter 10 aus einer Vielzahl von Bauelementen der gleichen Art, also hier gleichartiger Befestigungsschellen, jedoch mit unterschiedlichen Abmessungen, die drei Bauelemente 116 aus, mit denen die tatsächlichen Abstände zulässigerweise überbrückbar sind. Insbesondere wählt der Bauroboter 10 die drei Bauelemente 116 mit drei unterschiedlichen Längen aus.

Soweit die ausgewählten Bauelemente 116, beispielsweise in einer vom Bauroboter 10 erreichbaren Ablage, unmittelbar verfügbar sind, nimmt er diese mit Hilfe seiner Halterung 26 auf.

Anderenfalls beschafft der Bauroboter 10 die ausgewählten Bauelemente 116. Dazu kann er beispielsweise spezifische Bauformen der ausgewählten Bauelemente 116 an die Vorfertigung 200 (siehe Fig. 3), beispielsweise durch Telekommunikation, übertragen. Dort können die ausgewählten Bauelemente 116 gefertigt werden - in Fig. 3 symbolisch durch Schneidelinien **120** angedeutet - und anschließend zum Bauroboter 10 transportiert werden, sodass dieser diese wiederum mit Hilfe seiner Halterung 26 aufnehmen kann.

In einer weiteren Phase **1040** positioniert der Bauroboter 10 mit Hilfe seines zweiten Manipulators 21 nacheinander die ausgewählten Bauelemente 116 an den jeweils vorgesehenen Positionen auf dem Gebäudeteil 10 und befestigt diese mit Hilfe seines ersten Manipulators 20, insbesondere mit seinem Schraubensetzgerät 22, am Gebäudeteil 110. Zur Vereinfachung des Ausführungsbeispiels wird dabei angenommen, dass benötigte Bohrlöcher vorab in das Gebäudeteil 110 gebohrt worden sind.

Beispielsweise zu Dokumentationszwecken passt der Bauroboter 10 die in seiner Speichereinheit 32 gespeicherten Daten des BIM-Modells 100 hinsichtlich der tatsächlich ausgewählten und am Gebäudeteil 10 angeordneten Bauelemente 116 an und aktualisiert in einer Phase **1050** anhand der angepassten Daten das BIM-Modell 100, sodass die tatsächlich ausgewählten Bauelemente 116 im BIM-Modell 100 registriert sind.

Bei Varianten des Verfahrens 1000 kann auf ein oder mehrere der Phasen 1010 und / oder die 1050, verzichtet werden.

### Bezugszeichenliste

- 10: Bauroboter
- 12: Fahrwerk
- 14: Gehäuse
- 16: Steuerraum
- 18: erster Manipulator
- 19: zweiter Manipulator
- 20: erster Endeffektor
- 21: zweiter Endeffektor
- 22: Schraubensetzgerät
- 24: Halterung
- 25: Greifer
- 26: Bildaufnahmeeinheit
- 28: Bildverarbeitungseinheit
- 30: Steuerung
- 32: Speichereinheit
- 34: Programmcode
- 100: BIM-Modell
- 110: Gebäude
- 112: Gebäudeteil
- 114: Leitung
- 116: Bauelement
- 118: Koordinatensystem
- 120: Schneidelinie
- 200: Vorfertigung
- 1000: Verfahren
- 1010: Phase
- 1020: Phase
- 1030: Phase
- 1040: Phase
- 1050: Phase

## Patentansprüche

1. **Verfahren (1000)** zur Ausführung von Bauarbeiten durch einen Bauroboter (10), wobei ein Bauroboter (10) ein Bauelement (116) an einem Gebäudeteil (112) anordnet, umfassend die Schritte:
- Erfassen eines Ist-Zustands des Gebäudeteils (112),
- Auswählen eines Bauelements (116) aus einer Vielzahl unterschiedlicher Bauelemente (116) und / oder Fertigen des Bauelements (116) anhand des Ist-Zustands des Gebäudeteils (112),
- Anordnen des Bauelements (116) am Gebäudeteil (112) durch einen Bauroboter (10).

2. Verfahren (1000) nach dem vorhergehenden Anspruch, **dadurch gekennzeichnet, dass** aus einer Vielzahl von Bauelemente (116) der gleichen Art, jedoch mit unterschiedlichen Abmessungen ausgewählt wird.

3. Verfahren (1000) nach einem der vorhergehenden Ansprüche, **dadurch gekennzeichnet, dass** aus einer Vielzahl Bauelemente (116) der gleichen Art, jedoch mit unterschiedlichen Befestigungsstellen ausgewählt wird.

4. Verfahren (1000) nach einem der vorhergehenden Ansprüche, **dadurch gekennzeichnet, dass** das Bauelement (116) oder zumindest die Art des Bauelements (116) anhand eines BIM-Modells (100) ausgewählt wird.

5. Verfahren (1000) nach einem der vorhergehenden Ansprüche, **dadurch gekennzeichnet, dass** das ausgewählte Bauelement (116) im BIM-Modell (100) registriert wird.

6. Verfahren (1000) nach einem der vorhergehenden Ansprüche, **dadurch gekennzeichnet, dass** der erfasste Ist-Zustand oder eine spezifische Bauform des Bauelements (116) an eine Vorfertigung (200) übermittelt wird und das Bauelement (116) in der Vorfertigung (200) ausgewählt oder gefertigt wird.

7. Verfahren (1000) nach einem der vorhergehenden Ansprüche, **dadurch gekennzeichnet, dass** der Ist-Zustand des Gebäudeteils (112) mit Hilfe einer Bildaufnahmeeinheit (26) zur Aufnahme wenigstens einer optischen Aufnahme, erfasst wird.

8. Verfahren (1000) nach einem der vorhergehenden Ansprüche, **dadurch gekennzeichnet, dass** der Ist-Zustand des Gebäudeteils (112) mit Hilfe von Messdaten zu einer vorangehend ausgeführten Bauarbeit erfasst wird.

9. **Bauroboter (10)** zur Ausführung von Bauarbeiten, wobei der Bauroboter (10) eine mobile Plattform, wenigstens einen Manipulator und eine Steuerung (30) aufweist, **dadurch gekennzeichnet, dass** die Steuerung (30) eingerichtet ist, das Verfahren (1000) nach einem der vorhergehenden Ansprüche auszuführen.

10. Bauroboter (10) nach dem vorhergehenden Anspruch, **dadurch gekennzeichnet, dass** der Bauroboter (10) eine Bildaufnahmeeinheit (26) zur Aufnahme wenigstens einer optischen Aufnahme so wie eine Bildverarbeitungseinheit (28) aufweist, wobei die Steuerung (30) des Bauroboters eingerichtet ist, über die Bildaufnahmeeinheit (26) wenigstens eine Aufnahme des Gebäudeteils (112) aufzunehmen und mittels der Bildverarbeitungseinheit (28) aus der Aufnahme einen Ist-Zustand des Gebäudeteils (112) zu ermitteln.

11. Bauroboter (10) nach einem der Ansprüche 9 bis 10, **dadurch gekennzeichnet, dass** der Bauroboter (10) eingerichtet ist, wenigstens ein Messdatum zu einer ausgeführten Bauarbeit zu erfassen.

12. Bauroboter (10) nach einem der Ansprüche 9 bis 11, **dadurch gekennzeichnet, dass** der Bauroboter (10) eine Halterung (24) zum Halten des Bauelements (116) aufweist.
